Europäisches Patentamt

European Patent Office

Office européen des brevets

(19)

(11) EP 0 501 542 B1

(12) EUROPÄISCHE PATENTSCHRIFT

(45) Veröffentlichungstag und Bekanntmachung des Hinweises auf die Patenterteilung:
15.05.1996 Patentblatt 1996/20

(51) Int Cl.6: **C22B 1/10**, B01J 6/00

(21) Anmeldenummer: 92200288.6

(22) Anmeldetag: 03.02.1992

(54) **Verfahren zum Rösten von refraktären Golderzen**

Method for roasting refractory gold ores

Procédé de grillage de minerais réfractaires contenant de l'or

(84) Benannte Vertragsstaaten:
DE ES GB SE

(30) Priorität: 09.02.1991 DE 4103965

(43) Veröffentlichungstag der Anmeldung:
02.09.1992 Patentblatt 1992/36

(73) Patentinhaber: METALLGESELLSCHAFT
Akfiengesellschaft
D-60015 Frankfurt (DE)

(72) Erfinder:
• Fitting, Arno, Dr.
W-6392 Neu-Anspach (DE)
• Hirsch, Martin
W-6382 Friedrichsdorf (DE)
• Kofalck, Hans-H.
W-6234 Hattersheim 1 (DE)
• Peinemann, Bodo
W-6000 Frankfurt 50 (DE)

(56) Entgegenhaltungen:
DE-C- 2 624 302    US-A- 2 596 580
US-A- 2 650 159    US-A- 4 919 715

• Circulating Fluidized Bed Technology, Proceedings of the First Int. Conf. on CFB's, Halifax, Nova Scotia, CA, Nov. 18-20, 1985, L. Reh: "The Circulating Fluid Bed Reactor - A Key to Efficient Gas/Solid Processing", Seiten 105-118
• REVUE GENERALE DE THERMIQUE Bd. 27, Nr. 314, Februar 1988, PARIS, FR Seiten 100 - 107; A. FEUGIER ET AL.: 'Combustion désulfurante en lit circulant'

Printed by Jouve, 75001 PARIS (FR)

**Beschreibung**

Die Erfindung betrifft ein Verfahren zum Rösten von refraktärem Golderz in einer Wirbelschicht, die sich in einem Wirbelschichtreaktor über einem Anströmboden befindet, der zahlreiche Gasdurchtrittsöffnungen aufweist, wobei man Luft oder mit Sauerstoff angereicherte Luft als Fluidisierungsgas durch den Anströmboden aufwärts in die Wirbelschicht leitet, das Golderz in der Wirbelschicht bei Temperaturen von 500 bis 750°C röstet und aus dem Reaktor abgezogenes, feststoffhaltiges Abgas zum Abscheiden von Feststoffen durch einen Zyklon leitet.

Eine solches Verfahren ist aus US-A-2 596 580 bekannt, wobei der Wirbelschichtreaktor eine stationäre Wirbelschicht enthält. Ein ähnliches Verfahren mit zwei übereinander angeordneten stationären Wirbelbetten ist in der US-A-4 919 715 beschrieben.

Refraktäre Golderze sind solche Erze, die sich nicht direkt mit NaCN laugen lassen und als Gold-Träger Pyrite, Arsenopyrite oder Pyrite mit mehr oder weniger organischem Kohlenstoff haben. Für solche Materialien ist vor der Cyanid-Laugung eine möglichst vollständige Oxidation des Schwefel- und Kohlenstoffgehaltes erforderlich. Diese Oxidation erfolgte in der Vergangenheit hauptsächlich durch Röstung.

Zur Entfernung des bei der Röstung entstandenem $SO_2$ aus dem Abgas der Röstung ist jedoch die Produktion von Schwefelsäure erforderlich. Häufig ist jedoch der Grubenstandort so ungünstig, daß die erzeugte Schwefelsäure eher ein Ballast ist. Außerdem erfolgte durch das Rösten zum Teil ein Blockieren der Partikelporen durch rekristallisierte Eisenoxide, so daß das Gold-Ausbringen verschlechtert wurde.

Deshalb erfolgte die Oxidation in letzter Zeit zunehmend durch andere Verfahren, wie Druckoxidation in Autoklaven, bakterielle Laugung oder Oxidation durch Salpetersäure oder Chlor. Der entscheidende Unterschied zur Röstung besteht darin, daß bei diesen Verfahren der vorlaufende Schwefel direkt als Schwefelsäure bzw. Eisensulfat anfällt und vor der Cyanidlaugung mit $CaCO_3$ und CaO neutralisiert werden muß. Diese Verfahren sind zum Teil wesentlich teurer als die Röstung.

Aus "Journal of the South African Institute of Mining and Metallurgy", Band 86, Nr. 5, Mai 1986, Seiten 157-160, ist es bekannt, das Flotationskonzentrat von goldhaltigen Pyriten in einer Wirbelschicht zu rösten oder zu pyrolysieren. Die Pyrolyse erfolgt in einer mit Stickstoff als Fluidisierungsgas betriebenen Wirbelschicht, die durch elektrische Widerstandsheizung auf 700 bis 800°C erhitzt wird. Der Reaktor besteht aus zwei konzentrisch zueinander angeordneten Rohren, wobei das Material in den Ringraum chargiert wird, nach unten sinkt, im inneren Rohr nach oben befördert wird und zum Teil wieder in den äußeren Ringraum zurückfällt. Der abdestillierte Schwefel wird kondensiert. Das Endprodukt der Pyrolyse ist jedoch nur FeS. Außerdem ist teure elektrische Energie zur Erzeugung der notwendigen Reaktionswärme erforderlich.

Aus DE-C-26 24 302 ist es bekannt, sulfidische Erze oder Erzkonzentrate bei Temperaturen zwischen 450 und 1200°C in einer zirkulierenden Wirbelschicht unter Zufuhr sauerstoffhaltiger Fluidisierungsgase zu rösten. Aus dem Reaktor der zirkulierenden Wirbelschicht wird Feststoff entnommen und in einem separaten Wirbelkühler abgekühlt. Ein Teil des abgekühlten Feststoffes wird in den Reaktor zurückgeführt. Die erwärmte Fluidisierungsluft aus dem Wirbelkühler wird als Sekundärluft in den Reaktor eingeleitet. Dieses Verfahren macht keine Angaben zur Röstung von refraktären Golderzen.

Der Erfindung liegt die Aufgabe zugrunde, ein Verfahren zur Röstung von refraktären Golderzen zu schaffen, das ein optimales Produkt für die Cyanid-Laugung ergibt, und das - falls erforderlich - die Herstellung von Schwefelsäure vermeiden kann. Die Lösung dieser Aufgabe erfolgt erfindungsgemäß dadurch, daß man die Röstung des Golderzes in einer zirkulierenden Wirbelschicht durchführt, wobei die Feststoffkonzentration innerhalb des

Reaktors von unten nach oben ständig abnimmt, daß man eine Gas-Feststoff-Suspension vom Reaktor in den Zyklon leitet und im Zyklon abgeschiedene Feststoffe in einer Menge pro Stunde zum Wirbelschichtreaktor zurückführt, die mindestens dem 5fachen Gewicht der im Reaktor befindlichen Feststoffe entspricht, daß man das zu röstende Golderz mindestens 1 m über dem Anströmboden in die Wirbelschicht einführt, daß man die Temperatur im unteren Teil der Wirbelschicht um 4 - 30°C höher als im oberen Teil der Wirbelschicht einstellt und daß das Fluidisierungsgas mit Geschwindigkeiten von 30 bis 200 m/sec aus den Öffnungen des Anströmbodens in die Wirbelschicht austritt.

Als refraktäre Golderze können sowohl Erze als auch Konzentrate eingesetzt werden. Die zirkulierende Wirbelschicht besteht aus dem Wirbelschichtreaktor, dem Rückführzyklon und der Rückführleitung für den im Rückführzyklon abgeschiedenen Feststoff. Der Ausdruck "Rückführzyklon" beinhaltet einen Rückführzyklon oder mehrere gasseitig parallel geschaltete Rückfuhrzyklone. Das bei der Erfindung angewendete Wirbelschichtprinzip zeichnet sich dadurch aus, daß - im Unterschied zur "klassischen" Wirbelschicht, bei der eine dichte Phase durch einen deutlichen Dichtesprung von dem darüber befindlichen Gasraum getrennt ist - Verteilungszustände ohne definierte Grenzschicht im Wirbelschichtreaktor vorliegen. Ein Dichtesprung zwischen dichter Phase und darüber befindlichem Staubraum ist nicht existent, jedoch nimmt innerhalb des Reaktors die Feststoffkonzentration von unten nach oben ständig ab.

Die aus dem Wirbelschichtreaktor ausgetragene Suspension wird in den Rückführzyklon der zirkulierenden Wirbelschicht geleitet, dort weitgehend von Feststoff befreit, und der abgeschiedene Feststoff in den Wirbelschichtreaktor derart zurückgeleitet, daß innerhalb der zirkulierenden Wirbelschicht der stündlichen Feststoffumlauf mindestens das 5fache des im Wirbelschichtreaktor befindlichen Feststoffgewichtes beträgt. Die Temperatur im Wirbelschichtreaktor wird auf einen konstanten Wert innerhalb des angegebenen Bereiches eingestellt, wobei jedoch die Temperatur im unteren Bereich der Wirbelschicht um 4 bis 30°C und üblicherweise höchstens 12°C höher ist als im oberen Teil der Wirbelschicht. Die höhere Temperatur im unteren Bereich der Wirbelschicht wird dadurch erreicht, daß das Erz in einer bestimmten Höhe über dem Boden zugegeben wird, die mindestens 1 m beträgt. Dadurch wird unterhalb der Zugabestelle eine sauerstoffreichere Atmosphäre eingestellt, in der $Fe_3O_4$ zu $Fe_2O_3$ oxidiert wird. Das $Fe_2O_3$ gelangt in den oberen Teil der Wirbelschicht, der eine sauerstoffärmere Atmosphäre hat, wird dort teilweise zu $Fe_3O_4$ reduziert, gelangt wieder in den unteren Teil und wird dort wieder oxidiert. Durch die Oxidation von $Fe_3O_4$ zu $Fe_2O_3$ wird ein Teil der für das Verfahren erforderlichen Wärmemenge gedeckt. Der Sauerstoffgehalt des eingeleiteten Gases wird auf einen nahe-stöchiometrischen Wert, bezogen auf den Gehalt des Materials an Schwefel und Kohlenstoff, eingestellt. Der Temperaturunterschied zwischen dem unteren und oberen Teil der Wirbelschicht ist ein zuverlässiges Maß für das Verhältnis von $Fe_2O_3$ zu $Fe_3O_4$ im ausgetragenen Röstgut. Das für die Cyanid-Laugung optimale Verhältnis von Magnetit zu Hämatit wird durch entsprechende Einstellung der Temperaturdifferenz im Reaktor für das jeweilige Einsatzmaterial erzielt, wobei die Temperaturdifferenz durch den Sauerstoffgehalt der eingeleiteten Gase eingestellt wird.

Die Geschwindigkeit des Fluidisierungsgases von 30 bis 200 m/sec und vorzugsweise 50 bis 100 m/sec ist die Austrittsgeschwindigkeit des Fluidisierungsgases an den Öffnungen des Anströmbodens in den Reaktor. Wenn der Heizwert des Erzes gering ist, kann auch das Fluidisierungsgas oder ein Teilstrom des Fluidisierungsgases durch indirekten Wärmeaustausch vorgewärmt werden. Diese Vorwärmung kann mit dem Abgas der zirkulierenden Wirbelschicht oder mit dem ausgetragenen Feststoff erfolgen. Bei geringem Heizwert des Erzes kann auch direkt vorgewärmtes Sekundärgas oberhalb des Anströmbodens in den Reaktor eingeleitet werden, wobei die Vorwärmung in einem separaten Wirbelkühler mit klassischer Wirbelschicht erfolgt. In diesem Wirbelkühler wird das heiße Röstgut ausgetragen und mit sauerstoffhaltigem Fluidisierungsgas gekühlt. Das dabei erwärmte sauerstoffhaltige Fluidisierungsgas wird als Sekundärgas in den Reaktor der zirkulierenden Wirbelschicht eingeleitet. Gleichzeitig können in dem Wirbelschichtkühler noch Kühlflächen angeordnet sein, durch die das Fluidisierungsgas für die zirkulierende Wirbelschicht geleitet wird und dabei vorgewärmt wird. Wenn ein Konzentrat mit relativ hohem Schwefel- und/oder Kohlenstoffgehalt in die zirkulierende Wirbelschicht eingesetzt wird, ist eine Wärmeabfuhr aus der Wirbelschicht erforderlich. Diese Wärmeabfuhr kann durch Kühlflächen im Wirbelschichtreaktor oder durch einen Umlaufkühler erfolgen. Dieser Umlaufkühler ist ein separater Wirbelschichtkühler mit stationärer Wirbelschicht, in dem der im Rückführzyklon abgeschiedene Feststoff oder ein Teil dieses Feststoffes eingeleitet wird und in den sauerstoffhaltige Gase als Fluidisierungsgas eingeleitet werden.

Als refraktäre Golderze können sowohl Erze als auch Konzentrate eingesetzt werden. Als sauerstoffhaltige Gase können Luft oder mit Sauerstoff angereicherte Luft verwendet werden. Die zirkulierende Wirbelschicht besteht aus dem Wirbelschichtreaktor, dem Rückführzyklon und der Rückführleitung für den im Rückführzyklon abgeschiedenen Feststoff. Der Ausdruck "Rückführzyklon" beinhaltet einen Rückführzyklon oder mehrere gasseitig parallel geschaltete Rückführzyklone. Das bei der Erfindung angewendete Wirbelschichtprinzip zeichnet sich dadurch aus, daß - im Unterschied zur "klassischen" Wirbelschicht, bei der eine dichte Phase durch einen deutlichen Dichtesprung von dem darüber befindlichen Gasraum getrennt ist - Verteilungszustände ohne definierte Grenzschicht im Wirbelschichtreaktor vorliegen. Ein Dichtesprung zwischen dichter Phase und darüber befindlichem Staubraum ist nicht existent, jedoch nimmt innerhalb des Reaktors die Feststoffkonzentration von unten nach oben ständig ab. Bei der Definition der Betriebsbedingungen über die Kennzahlen von Froude und Archimedes ergeben sich die Bereiche:

$$0,1 \leq 3/4 \cdot Fr^2 \cdot \frac{\rho g}{\rho k - g} \leq 10 \, ,$$

bzw.

$$0,01 \leq Ar \leq 100 \, ,$$

wobei

$$Ar = \frac{d_k^3 \cdot g \, (\rho k - \rho g)}{g \cdot \nu^2}$$

und

$$Fr^2 = \frac{u^2}{g \cdot d_k}$$

sind.

Es bedeuten:

u     die relative Gasgeschwindigkeit in m/sec
Ar    die Archimedes-Zahl
Fr    die Froude-Zahl
$\rho g$    die Dichte des Gases in $kg/m^3$
$\rho k$    die Dichte des Feststoffteilchens in $kg/m^3$
$d_k$    den Durchmesser des kugelförmigen Teilchens in m
$\nu$    die kinematische Zähigkeit in $m^2/sec$
g     die Gravitationskonstante in $m/sec^2$

Die aus dem Wirbelschichtreaktor ausgetragene Suspension wird in den Rückführzyklon der zirkulierenden Wirbelschicht geleitet, dort weitgehend von Feststoff befreit, und der abgeschiedene Feststoff in den Wirbelschichtreaktor derart zurückgeleitet, daß innerhalb der zirkulierenden Wirbelschicht der stündliche Feststoffumlauf mindestens das Fünffache des im Wirbelschichtreaktor befindlichen Feststoffgewichtes beträgt. Die Temperatur im Wirbelschichtreaktor wird auf einen konstanten Wert innerhalb des angegebenen Bereiches eingestellt, wobei jedoch die Temperatur im unteren Teil der Wirbelschicht um den angegebenen Betrag höher ist als im oberen Teil der Wirbelschicht. Die höhere Temperatur im unteren Bereich der Wirbelschicht wird dadurch erreicht, daß das Erz in einer bestimmten Höhe über dem Boden zugegeben wird, die mindestens 1 m beträgt. Dadurch wird unterhalb der Zugabestelle eine Sauerstoff-reichere Atmosphäre eingestellt, in der $Fe_3O_4$ zu $Fe_2O_3$ oxidiert wird. Das $Fe_2O_3$ gelangt in den oberen Teil der Wirbelschicht, der eine Sauerstoff-ärmere Atmosphäre hat, wird dort teilweise zu $Fe_3O_4$ reduziert, gelangt wieder in den unteren Teil und wird dort wieder oxidiert. Durch die Oxidation von $Fe_3O_4$ zu $Fe_2O_3$ wird ein Teil der für das Verfahren erforderlichen Wärmemenge gedeckt. Der Sauerstoffgehalt des eingeleiteten Gases wird auf einen nahestöchiometrischen Wert, bezogen auf den Gehalt des Materials an Schwefel und Kohlenstoff, eingestellt. Der Temperaturunterschied zwischen dem unteren und oberen Teil der Wirbelschicht ist ein zuverlässiges Maß für das Verhältnis von $Fe_2O_3$ zu $Fe_3O_4$ im ausgetragenen Röstgut. Das für die Cyanidlaugung optimale Verhältnis von Magnetit zu Hämatit wird durch entsprechende Einstellung der Temperaturdifferenz im Reaktor für das jeweilige Einsatzmaterial erzielt, wobei die Temperaturdifferenz durch den Sauerstoffgehalt der eingeleiteten Gase eingestellt wird. Die Geschwindigkeit des Fluidisierungsgases von 30 bis 200 m/sec ist die Austrittsgeschwindigkeit des Fluidisierungsgases an den Öffnungen des Anströmbodens in den Reaktor. Wenn der Heizwert des Erzes gering ist, kann auch das Fluidisierungsgas oder ein Teilstrom des Fluidisierungsgases durch indirekten Wärmeaustausch vorgewärmt werden. Diese Vorwärmung kann mit dem Abgas der zirkulierenden Wirbelschicht oder mit dem ausgetragenen Feststoff erfolgen. Bei geringem Heizwert des Erzes kann auch direkt vorgewärmtes Sekundärgas oberhalb des Anströmbodens in den Reaktor eingeleitet werden, wobei die Vorwärmung in einem separaten Wirbelkühler mit klassischer Wirbelschicht erfolgt. In diesen Wirbelkühler wird das heiße Röstgut ausgetragen, und mit sauerstoffhaltigem Fluidisierungsgas gekühlt. Das dabei erwärmte sauerstoffhaltige Fluidisierungsgas wird als Sekundärgas in den Reaktor der zirkulierenden Wirbelschicht eingeleitet. Gleichzeitig können in dem Wirbelschichtkühler noch Kühlflächen angeordnet sein, durch die das Fluidisierungsgas für die zirkulierende Wirbelschicht geleitet wird und dabei vorgewärmt wird. Wenn ein Konzentrat mit relativ hohem Schwefel- und/oder Kohlenstoffgehalt in die zirkulierende Wirbelschicht eingesetzt wird, ist eine Wärmeabfuhr aus der Wirbelschicht erforderlich. Diese Wärmeabfuhr kann durch Kühlflächen im Wirbelschichtreaktor oder durch einen Umlaufkühler erfolgen. Dieser Umlaufkühler ist ein separater Wirbelschichtkühler mit stationärer Wirbelschicht, in den der im Rückführzyklon abgeschiedene Feststoff oder ein Teil dieses Feststoffes eingeleitet wird und in den sauerstoffhaltige Gase als Fluidisierungsgas eingeleitet werden. In der Wirbelschicht sind Kühlregister angeordnet, die z.B. von Wasser durchflossen werden. Der gekühlte Feststoff oder ein Teil des gekühlten Feststoffes wird in den Reaktor der zirkulierenden Wirbelschicht zurückgeführt. Das erwärmte Fluidisierungsgas kann als Sekundärgas in den Wirbelschichtreaktor der zirkulierenden Wirbelschicht eingeleitet werden. Die Wärmeabfuhr oder ein Teil der erforderlichen Wärmeabfuhr kann auch durch Aufgabe des Konzentrates in Form einer wäßrigen Suspension in den Wirbelschichtreaktor erfolgen. Durch die Austrittsgeschwindigkeit des Fluidisierungsgases wird vor allem für das rezirkulierte Grobkorn ein gewisser Mahleffekt im unteren Teil des Wirbelschichtreaktors erzielt. Dieser Mahleffekt reißt die teilweise dichten Eisenoxid-Deckschichten auf der Kornoberfläche und im äußeren Porenbereich der Körner auf und sorgt für eine exzellente Laugbarkeit. Die Körnung wird dabei gleichzeitig verfeinert von z.B. 50 % < 35 μm auf 65 % < 35 μm.

Eine vorzugsweise Ausgestaltung besteht darin, daß die Temperatur im unteren Teil der Wirbelschicht im Reaktor 4 bis 12°C höher eingestellt wird als im oberen Teil der Wirbelschicht. In diesem Bereich wird ein besonders gutes Verhältnis von $Fe_3O_4$ zu $Fe_2O_3$ im ausgetragenen Röstgut erzielt.

Eine vorzugsweise Ausgestaltung besteht darin, daß das Fluidisierungsgas mit einer Geschwindigkeit von 50 bis 100 m/sec in den Reaktor eingeleitet wird. In diesem Bereich wird ein guter Mahleffekt mit relativ geringem Aufwand erzielt.

Eine vorzugsweise Ausgestaltung besteht darin, daß ein Schwefel-bindendes Material in den Reaktor zugegeben wird, und die Menge so eingestellt wird, daß der Schwefelgehalt des Golderzes überwiegend abgebunden wird. Als Schwefel-bindendes Material können Ca-haltige Materialien wie Kalkstein, CaO und Dolomit eingesetzt werden. Ein Teil des Entschwefelungsmittels kann auch in der Gangart des Erzes vorhanden sein. Das gebildete $SO_2$ wird von dem Schwefel-bindenden Material überwiegend als Ca-Sulfat/Sulfit gebunden, wobei der Sulfit-Anteil gering ist. Wenn gleichzeitig eine überwiegende Abbindung des $SO_2$ durch das Ca-haltige Material und eine gute Laugbarkeit erzielt werden sollen, wird die Temperatur vorzugsweise im Bereich von 650 bis 750°C und insbesondere im Bereich von 650 bis 700°C gehalten. Diese Temperaturbereiche stellen den optimalen Bereich im Hinblick auf eine gemeinsame Abbindung des $SO_2$ und eine gute Laugbarkeit des Röstgutes dar. Durch die Sulfatbildung wird gleichzeitig ein Teil der für die Reaktion erforderlichen Wärme erzeugt.

Eine vorzugsweise Ausgestaltung besteht darin, daß das Schwefel-bindende Material in einer Menge zugegeben wird, die über die zur Abbindung des Schwefels erforderliche Menge hinausgeht, und der Überschuß überwiegend zu CaO umgesetzt wird. Auf diese Weise kann das für die Einstellung des pH-Wertes bei der Cyanidlaugung erforderliche CaO in günstiger Weise hergestellt werden, so daß der weitere Zusatz von CaO zur pH-Einstellung bei der nachfolgenden Cyanidlaugung weitgehend reduziert oder vollständig überflüssig wird.

Eine vorzugsweise Ausgestaltung besteht darin, daß zusätzlicher Brennstoff in die Wirbelschicht eingeleitet wird. Es können feste, gasförmige oder flüssige Brennstoffe in die Wirbelschicht eingeleitet werden. Dadurch ist auch die Röstung von Golderzen in wirtschaftlicher Weise möglich, deren Gehalt an Schwefel und/oder Kohlenstoff nicht zur Deckung der erforderlichen Wärmemenge ausreicht.

Eine vorzugsweise Ausgestaltung besteht darin, daß Schwefel-bindendes Material vor dem Einsatz in den Reaktor der zirkulierenden Wirbelschicht in einer separaten Wirbelschicht kalziniert wird, und das kalzinierte Produkt im heißen Zustand in den Reaktor eingesetzt wird. Die separate Wirbelschicht kann ebenfalls als zirkulierende Wirbelschicht oder als klassische Wirbelschicht ausgebildet sein. Diese Ausführung ist insbesondere von Vorteil, wenn billiges Erdgas zur Verfügung steht, welches jedoch wegen seines hohen Zündpunktes von mindestens 670°C und des schlechten Ausbrandes bei den relativ niedrigen Rösttemperaturen nicht in die zirkulierende Wirbelschicht einzusetzen ist. In einem solchen Fall wird ein Teil oder die Gesamtmenge des für die $SO_2$-Bindung und/oder pH-Einstellung erforderlichen CaO in der separaten Wirbelschicht unter Verwendung von Erdgas als Brennstoff bei z.B. 950°C durch Kalzination erzeugt und heiß in den Reaktor der zirkulierenden Wirbelschicht aufgegeben. Dadurch steht bei der Röstung zusätzlich die volle Sulfatisierungswärme des CaO zur Verfügung, die in der Regel für einen autothermen Röstbetrieb ausreicht. Die im Hinblick auf die Wärmeenergie optimale Kombination besteht darin, eine $CaCO_3$-Spaltung in der separaten Wirbelschicht und in der zirkulierenden Wirbelschicht der Röstung in der Weise auszuführen, daß nur so viel $CaCO_3$ in der separaten Wirbelschicht gespalten wird, daß die zirkulierende Wirbelschicht der Röstung gerade autotherm verläuft.

Die Erfindung wird anhand eines Beispiels und einer Figur näher erläutert.

In Bild 1 fördert die Dosierpumpe (1) das zu behandelnde Material in den Verteilertopf (2). Durch Falleitungen (3) wird die Konzentrataufschlämmung gleichmäßig in den unteren Bereich des Reaktors (4) der zirkulierenden Wirbelschicht eingetragen. Atmosphärische Luft wird als Oxidations- und Fluidisierungsgas durch das Gebläse (5) in den Windkasten (6) des Reaktors (4) gefördert und strömt von dort durch den Anströmboden (7). Die aus dem Reaktor (4) ausgetragene Suspension aus oxidiertem Feststoff (Röstgut) und Röstgas wird in den Rückführzyklon (8) der zirkulierenden Wirbelschicht geleitet, dort weitgehend vom Feststoff befreit, und der abgeschiedene Feststoff über die Rückführleitung (9) und den Tauchtopf (10) in den Reaktor (4) zurückgeführt. Aus dem Tauchtopf (10) wird durch die Austragsleitung (11) kontinuierlich Röstgut abgezogen. Das aus dem Rückführzyklon (8) austretende, staubbeladene Röstgas wird durch die Gasleitung (12) zur Kühlung, Entstaubung und Weiterbehandlung weitergeleitet. Über das Regelventil (13) erfolgt eine dosierte Zugabe von Wasser in die aufzugebende Konzentrataufschlämmung. Der Reaktor (4) hat - gemessen vom Anströmboden (7) - eine Höhe von 25 m und die Höhe der Aufgabe durch die Falleitungen (3) beträgt 4 m.

Beispiel

Es wird ein refraktäres Pyriterzkonzentrat mit einem Goldgehalt von 40 g/t und 33,3 % Sulfidschwefel eingesetzt, der als Pyrit vorliegt. Die Korngröße beträgt $d_{50}$ = 30 µm und 100 % < 200 µm. Es werden 24 000 kg/h Konzentrat in wäßriger Aufschlämmung mit 70 % Feststoffgehalt durch die Falleitungen (3) in den Reaktor (4) aufgegeben. In den Windkasten (6) werden 37 000 Nm³/h Luft mit einer Temperatur von 60°C und einem Druck von 1,2 bar eingeleitet. Die Luft strömt mit einer Geschwindigkeit von 60 m/sec durch die Öffnungen des Anströmbodens (7). Die Temperatur im unteren Teil des Reaktors beträgt 650°C und im oberen Teil 642°C. Die eingeblasene Luftmenge wird so geregelt, daß sich eine nahe-stöchiometrische Verbrennung ergibt. Der Sauerstoffgehalt im oberen Teil des Reaktors beträgt 0,5 %. Das durch die Austragsleitung (11) ausgetragene Röstgut hat ein Verhältnis von $Fe_2O_3$ zu $Fe_3O_4$ = 4:1. Der Sulfid-Schwefelgehalt beträgt 0,2 %. Bei der Weiterverarbeitung wird eine Goldausbeute von 95 % erzielt. Das Röstgas in Leitung (12) hat einen Gehalt an $SO_2$ von 14,8 % und einen Sauerstoffgehalt von < 0,5 %.

Die Vorteile der Erfindung bestehen darin, daß durch den Mahleffekt die Bildung von Eisenoxid-Deckschichten auf den Körnern weitgehend vermieden wird, ein genaues und optimales Verhältnis von $Fe_3O_4$ zu $Fe_2O_3$ im Röstgut eingestellt werden kann, eine weitgehende Verbrennung von Schwefel und Kohlenstoff erfolgt und damit ein Röstgut mit sehr guten Laugungseigenschaften erzielt wird. Schwankungen in der chemischen Zusammensetzung des Erzes können sofort erkannt werden und der vorgegebene Temperaturunterschied im Reaktor durch Korrektur der eingeblasenen Sauerstoffmenge wiederhergestellt werden. Außerdem kann beim Zusatz von Schwefel-bindenden Mitteln der $SO_2$-Gehalt im Abgas auf so niedrige Werte gesenkt werden, daß die Nachschaltung einer Schwefelsäureanlage vermieden werden kann.

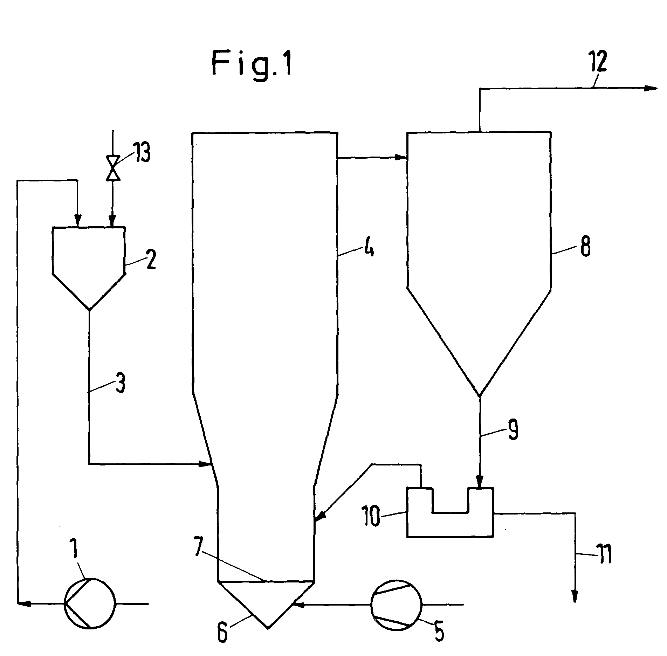

**Patentansprüche**

1. Verfahren zum Rösten von refraktärem Golderz in einer Wirbelschicht, die sich in einem Wirbelschichtreaktor (4) über einem Anströmboden (7) befindet, der zahlreiche Gasdurchtrittsöffnungen aufweist, wobei man Luft oder mit Sauerstoff angereicherte Luft als Fluidisierungsgas durch den Anströmboden aufwärts in die Wirbelschicht leitet, das Golderz in der Wirbelschicht bei Temperaturen von 500 - 750°C röstet und aus dem Reaktor abgezogenes, feststoffhaltiges Abgas zum Abscheiden von Feststoffen durch einen Zyklon (8) leitet, dadurch gekennzeichnet, daß man die Röstung des Golderzes in einer zirkulierenden Wirbelschicht durchführt, wobei die Feststoffkonzentration innerhalb des Reaktors von unten nach oben ständig abnimmt, daß man eine Gas-Feststoff-Suspension vom Reaktor in den Zyklon (8) leitet und im Zyklon abgeschiedene Feststoffe in einer Menge pro Stunde zum Wirbelschichtreaktor zurückführt, die mindestens dem 5fachen Gewicht der im Reaktor befindlichen Feststoffe entspricht, daß man das zu röstende Golderz (3) mindestens 1 m über dem Anströmboden (7) in die Wirbelschicht einführt, daß man die Temperatur im unteren Teil der Wirbelschicht um 4 bis 30°C höher als im oberen Teil der Wirbelschicht einstellt und daß das Fluidisierungsgas mit Geschwindigkeiten von 30 bis 200 m/sec aus den Öffnungen des Anströmbodens in die Wirbelschicht austritt.

2. Verfahren nach Anspruch 1, dadurch gekennzeichnet, daß ein schwefelbindendes Material in den Reaktor (4) zugegeben wird und die Menge so eingestellt wird, daß der Schwefelgehalt des Golderzes überwiegend abgebunden wird.

3. Verfahren nach einem der Ansprüche 1 oder 2, dadurch gekennzeichnet, daß zusätzlicher Brennstoff in die Wirbelschicht eingeleitet wird.

4. Verfahren nach Anspruch 2, dadurch gekennzeichnet, daß schwefelbindendes Material vor dem Einsatz im Reaktor in einer separaten Wirbelschicht kalziniert wird und das kalzinierte Produkt im heißen Zustand in den Reaktor geleitet wird.

**Claims**

1. A method for roasting refractory gold ore in a fluidised bed which is located in a fluidised bed reactor (4) above a perforated bottom (7) which has numerous gas passage openings, wherein air or air enriched with oxygen is passed upwards through the perforated bottom into the fluidised bed as fluidising gas, the gold ore is roasted in the fluidised bed at temperatures of 500 - 750°C and solids-containing exhaust gas withdrawn from the reactor is passed through a cyclone (8) to separate off solids, characterised in that the roasting of the gold ore is effected in a circulating fluidised bed, with the solids concentration within the reactor constantly decreasing from bottom to top, that a gas/solids suspension is passed from the reactor into the cyclone (8) and solids separated off in the cyclone are returned to the fluidised bed reactor in a quantity per hour which corresponds to at least 5 times the weight of the solids contained in the reactor, that the gold ore (3) to be roasted is introduced into the fluidised bed at least 1 m above the perforated bottom (7), that the temperature in the lower part of the fluidised bed is set to 4 to 30°C higher than in the upper part of the fluidised bed and that the fluidising gas emerges from the openings of the perforated bottom into the fluidised bed at velocities of 30 to 200 m/sec.

2. A method according to Claim 1, characterised in that a sulphur-binding material is added to the reactor (4) and the quantity is set such that the sulphur content of the gold ore is predominantly bound.

3. A method according to one of Claims 1 or 2, characterised in that additional fuel is introduced into the fluidised bed.

4. A method according to Claim 2, characterised in that sulphur-binding material is calcined in a separate fluidised bed before being used in the reactor and the calcined product is passed into the reactor in the hot state.

**Revendications**

1. Procédé de grillage de minerai d'or réfractaire dans un lit fluidisé qui se trouve dans un réacteur (4) à lit fluidisé au dessus d'un plateau (7) d'afflux comportant un grand nombre d'orifices de passage pour du gaz, qui consiste à envoyer de l'air ou de l'air enrichi en oxygène comme gaz de fluidisation à travers le plateau d'afflux en sens ascendant dans le lit fluidisé, à griller le minerai d'or dans le lit fluidisé à des températures de 500 à 750°C et à envoyer l'effluent gazeux soutiré du réacteur et contenant de la matière solide dans un cyclone (8) pour en séparer des matières solides, caractérisé en ce qu'il consiste à effectuer le grillage du minerai d'or dans un lit fluidisé circulant; la concentration en matière solide dans le réacteur décroissant constamment de bas en haut, à envoyer une suspension de gaz et de matière solide du réacteur au cyclone (8) et à retourner de la matière solide séparée dans le cyclone au réacteur à lit fluidisé en une quantité à l'heure qui représente au moins cinq fois le poids de la matière solide se trouvant dans le réacteur, à introduire le minerai d'or (3) à griller dans le lit fluidisé au moins 1 m au dessus du plateau (7) d'afflux, à régler la température dans la partie inférieure du lit fluidisé à une valeur supérieure de 4 à 30°C à celle qui règne dans la partie supérieure du lit fluidisé et à faire sortir le gaz de fluidisation dans le lit fluidisé à des vitesses de 30 à 200m/sec des orifices du plateau d'afflux.

2. Procédé suivant la revendication 1, caractérisé en ce qu'il consiste à ajouter dans le réacteur (4) une substance fixant le soufre et en régler la quantité de manière que la teneur en soufre du minerai d'or soit fixée pour l'essentiel.

3. Procédé suivant l'une des revendications 1 ou 2, caractérisé en ce qu'il consiste à introduire du combustible supplémentaire dans le lit fluidisé.

4. Procédé suivant la revendication 2, caractérisé en ce qu'il consiste à calciner la substance fixant le soufre dans un lit fluidisé distinct avant de l'envoyer dans le réacteur et à envoyer le produit calciné à l'état chaud dans le réacteur.

# Fig.1